# EUROPÄISCHE PATENTSCHRIFT

(11) **EP 2 955 051 B1**
(45) Veröffentlichungstag und Bekanntmachung des Hinweises auf die Patenterteilung: **01.02.2017**
(21) Anmeldenummer: 15401049.0
(22) Anmeldetag: 01.06.2015
(51) Int. Cl.: B60K 35/00, B60K 37/06, B60N 2/46, B60R 11/00

(54) **ANORDNUNG VON BEDIEN- UND/ODER ANZEIGEELEMENTEN**
ASSEMBLY OF CONTROL AND/OR DISPLAY DEVICES
AGENCEMENT D'ELEMENTS DE COMMANDE ET/OU D'AFFICHAGE

(30) Priorität: 13.06.2014 DE 102014108322
(43) Veröffentlichungstag der Anmeldung: 16.12.2015
(73) Patentinhaber: Amazonen-Werke H. Dreyer GmbH & Co. KG, 49205 Hasbergen (DE)
(72) Erfinder: Schmidt, Christoph, 01217 Dresden (DE)

(56) Entgegenhaltungen:
- EP-A2- 2 290 501
- AT-A4- 505 754
- DE-U- 6 929 353
- US-A1- 2004 133 322

## Beschreibung

Die Erfindung betrifft eine Anordnung von Bedien- und/oder Anzeigeelementen gemäß des Oberbegriffes des Patentanspruches 1.

Eine derartige Anordnung ist grundsätzlich durch die EP2290501A2 bekannt. Eine weitere Anordnung von Bedien- und/oder Anzeigeelementen ist in EP 2 189 328 B1 beschrieben. Bei dieser Anordnung von Bedien- und/oder Anzeigeelementen bei einem Nutzfahrzeug ist in neben dem Bedienersitz ein Bedienfeld und eine Armlehne angeordnet. Das Bedienfeld weist von dem Bediener zu bedienende Bedien- und/oder visuell wahrzunehmende Anzeigeelemente auf. Weiterhin ist das Nutzfahrzeug in einem Fahr- und in einem Arbeitsmodus zu betreiben. Hierzu sind entsprechende Bedienelemente auf dem Bedienfeld für den jeweiligen Modus angeordnet. Des Weiteren sind auf oder an dem Nutzfahrzeug Arbeitsgeräte anzubringen. Diese Arbeitsgeräte lassen sich ebenfalls über Bedienelemente entsprechend bedienen und ansteuern. Hierzu sind dann üblicherweise weitere Bedienfelder, die weitere zusätzliche Bedienungs- und/oder Anzeigeelemente aufweisen, im Bereich des Bedienersitzes angeordnet.

Diese zusätzlichen Bedienfelder sind jedoch nicht optimal positioniert, so dass Bedienungselemente teilweise schlecht erreichbar und die Anzeigeelemente nicht optimal ablesbar sind.
Der Erfindung liegt die Aufgabe zu Grunde, eine verbesserte Anordnung für zusätzliche Bedienfelder, die vorzugsweise den auf und/oder an dem Nutzfahrzeug anzuordnenden Arbeitsgeräten zugeordnet sind, zu schaffen.
Diese Aufgabe wird erfindungsgemäß durch die kennzeichnenden Merkmale des Anspruchs 1 gelöst. Infolge dieser Maßnahme lässt sich das zusätzliche Bedienfeld zumindest für den Arbeitsmodus, insbesondere des Arbeitsgerätes in eine optimierte Position verlagern, um während der Arbeit mit dem Arbeitsgerät die dem zweiten Bedienfeld zugeordneten Bedienelemente verbessert erreichen und/der die Anzeigen auf dem Anzeigeelement entsprechend ablesen zu können.

Hierdurch werden Fehlbedienungen während des Arbeitsmodus in einfacher Weise vermieden bzw. ausgeschlossen.

Die der Erfindung zu Grunde liegenden Gedanken lassen sich wie folgt kurz zusammenfassen:
Die Bedienfelder der Bedien- und Anzeigeelemente für die Arbeitsfunktion der Maschine können entweder aus oder über den Bedienfeldern für die Fahrfunktionen gebracht werden oder auch seitlich aus dem Armlehnen herausgezogen werden.

Die Verlagerung des zweiten Bedienfelder des kann in einfacher Weise dadurch erfolgen, dass das zweite Bedienfeld mittels einer Schwenk- und/oder Schiebehalterung, die an oder im Bereich der Armlehne befestigt ist, in die jeweilige Position entsprechend des Fahr- und oder Arbeitsmodus des Nutzfahrzeuges in verschwenkbarer und/oder verschiebbarer Weise verlagerbar ist. Hierdurch kann das zweite Bedienfeld in einfacher Weise in die jeweils gewünschte, vorzugsweise optimierte Position verbracht werden.

In einer bevorzugten Weise ist vorgesehen, dass das zweite Bedienfeld mittels einer Halterung, die mittels eines eine aufrechte Gelenkachse aufweisenden Gelenkes an oder im Bereich der Armlehne befestigt ist, in die jeweilige Position entsprechend des Fahr- und oder Arbeitsmodus in verschwenkbarer Weise um die aufrechte Gelenkachse verlagerbar ist. Hierdurch ergibt sich eine relativ einfach ausgestaltete Anordnung.

Eine optimierte Zuordnung der jeweiligen Bedienelemente der einzelnen Bedienfelder lässt sich dadurch verwirklichen, dass das erste Bedienfeld Bedien- und/oder visuell wahrzunehmende Anzeigeelemente für die Fahrfunktionen und das zweite Bedienfeld Bedien- und/oder visuell wahrzunehmende Anzeigeelemente für die Arbeitsfunktionen des Nutzfahrzeuges und/oder mit dem Nutzfahrzeug zusammenwirkenden Geräte aufweist.

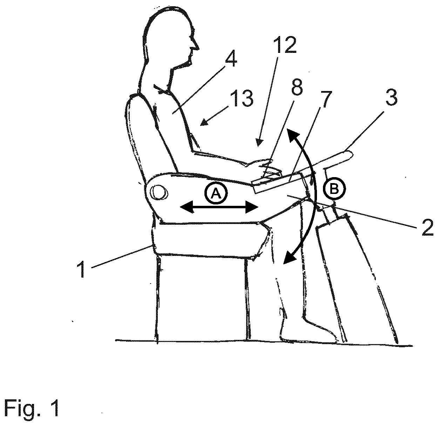

Weitere Einzelheiten der Erfindung sind der Beispielsbeschreibung zu entnehmen. Die Zeichnungen zeigen
- Fig.1: den Bedienersitz des Nutzfahrzeuges mit Armlehne und zugeordneten Bedienfeldern in Seitenansicht und in Prinzipdarstellung,
- Fig.2: den Bedienersitz des Nutzfahrzeuges mit Armlehne und zugeordneten Bedienfeldern in Draufsicht und in Prinzipdarstellung, wobei das zweite Bedienfeld sich seitlich außen neben dem Bedienersitz und der Armlehne befindet,
- Fig.3: den Bedienersitz des Nutzfahrzeuges mit Armlehne und zugeordneten Bedienfeldern in Draufsicht und in Prinzipdarstellung, wobei das zweite Bedienfeld sich teilweise vor dem Bediener befindet und Bedienelemente des ersten Bedienfeldes zumindest teilweise abdeckt,
- Fig.4: den Bedienersitz des Nutzfahrzeuges mit Armlehne und zugeordneten Bedienfeldern in Draufsicht und in Prinzipdarstellung, wobei das zweite Bedienfeld sich vor dem Bediener befindet,
- Fig.5: den Bedienersitz des Nutzfahrzeuges mit Armlehne und anders ausgestalteten zugeordneten Bedienfeldern in Draufsicht und in Prinzipdarstellung, wobei das zweite Bedienfeld sich seitlich außen neben dem Bedienersitz und der Armlehne befindet und
- Fig.6: die Anordnung der Bedienfelder nach Fig.5, wobei das zweite Bedienfeld für den Arbeitsmodus in Richtung des Bedieners verlagert ist.

Der allgemein mit 1 bezeichnete Bedienersitz ist mit einer rechten Armlehne 2 versehen und auf einem nicht dargestellten Nutzfahrzeug, wie beispielsweise einem landwirtschaftlichen Selbstfahrgerät, Ackerschlepper, Radlader, etc. angeordnet. Die Armlehne 2 ist an dem Bedienersitz 1 angrenzend angeordnet. Vor dem Bedienersitz 1 ist die als Lenkrad ausgebildete Lenkeinrichtung 3 für das Nutzfahrzeug angeordnet. Die Armlehne 2 kann, wie durch die Pfeile A und B angedeutet, in Längsrichtung wie auch in Höhenrichtung verschoben und/oder verschwenkt werden. Hierdurch kann die Armlehne 2 in die für den Bediener geeignete Position gebracht werden.

Im Bereich der Armlehne 2, angrenzend an den Bedienersitz 1, ist ein von dem Bediener 4 zu bedienende Bedien- 5 und/oder visuell wahrzunehmende Anzeigeelemente 6 aufweisendes erstes Bedienfeld 7 angeordnet. Dieses im Bereich der Armlehne angeordnete erste, vorzugsweise gegenüber der Armlehne 2 unverschwenkbare Bedienfeld 7, welches auch unmittelbar an der Armlehne befestigt sein kann, vorgesehen. Dieses erste Bedienfeld 7 weist nicht im Einzelnen dargestellte von dem Bediener 4 zu bedienende Bedien- 5 und/oder visuell wahrzunehmende Anzeigeelemente 6 für den Fahrmodus des Nutzfahrzeuges auf.

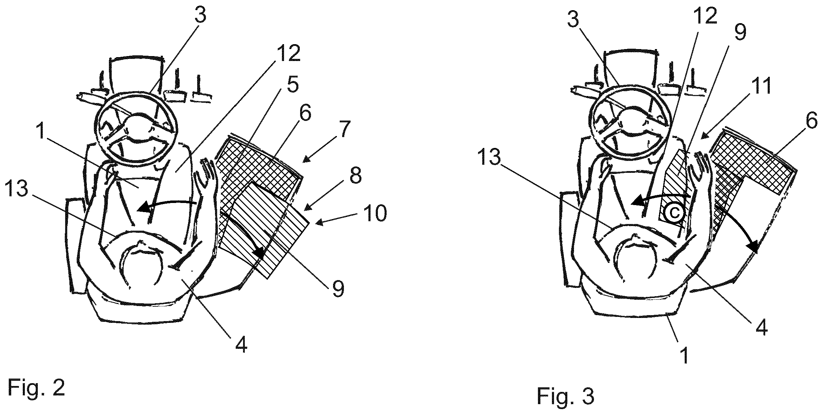

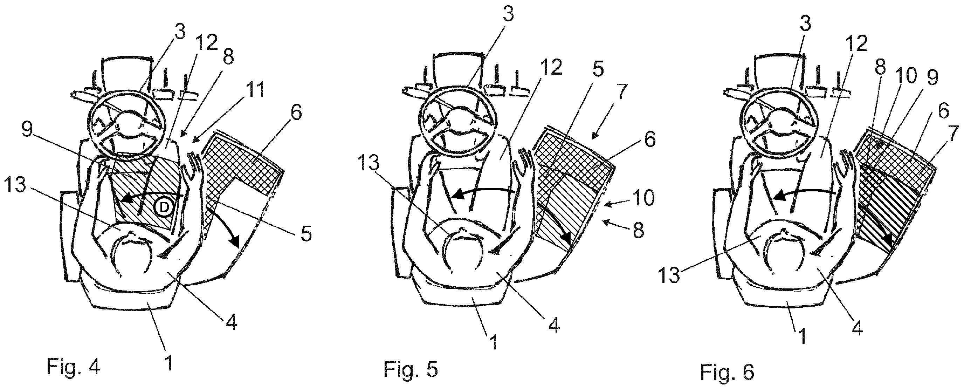

Des Weiteren ist im Bereich des Bedienersitzes 1 und der Armlehne 2 ein zweites, jedoch verlagerbares Bedienfeld 8 vorgesehen. Dieses zweite Bedienfeld 8 weist ebenfalls vom Bediener 4 zu bedienende Bedienelemente 9 auf. Zusätzlich kann diesem Bedienfeld 8 auch zumindest ein nicht dargestelltes Anzeigeelement zugeordnet sein. Das zweite Bedienfeld 8 ist gegenüber dem ersten Bedienfeld 7 aus einer ersten Position 10 seitlich neben dem Bedienersitz ein in eine zweite Position 12 zumindest teilweise oberhalb der Oberschenkel 13 und vor den Oberkörper 14 des auf dem Bedienersitz 1 sitzenden Bedieners 4 verlagerbar, wie in den Fig.3 und 4 dargestellt ist.

Die Darstellungen in den Fig.3 und 4 unterscheiden sich dadurch, dass das zweite Bedienfeld 8 in Fig. 3 weniger weit als in Fig.4 gegenüber dem ersten Bedienfeld 7 verlagert ist. In der Darstellung gemäß Fig.3 deckt das zweite Bedienfeld 8 in seiner zweiten, also in der verlagerten Position 11 vorgesehenen die während des Arbeitsmodus für nicht benötigte Fahrfunktionen vorgesehenen Bedien- 5 und/oder Anzeigeelemente 6 auf dem ersten Bedienfeld 7 ab.

Das erste Bedienfeld 7 weist Bedien- 5 und/oder visuell wahrzunehmende Anzeigeelemente 6 für die Fahrfunktionen und das zweite Bedienfeld 8 weist Bedien- 9 und/oder nicht dargestellte visuell wahrzunehmende Anzeigeelemente für die Arbeitsfunktionen des Nutzfahrzeuges und/oder mit dem Nutzfahrzeug zusammenwirkenden Geräte auf.

Bei den Darstellungen in den Fig.2 bis 4 ist das zweite Bedienfeld 8 mittels einer nicht dargestellten Schwenkhalterung, die an oder im Bereich der Armlehne 2 befestigt ist, in die jeweilige Position 10 oder 11 entsprechend des Fahr- und oder Arbeitsmodus des Nutzfahrzeuges in verschwenkbarer Weise verlagerbar angeordnet. Somit ist das zweite Bedienfeld 8 mittels der vorerwähnten Halterung, die mittels eines eine aufrechte Gelenkachse aufweisenden Gelenkes an oder im Bereich der Armlehne 2 befestigt ist, in die jeweilige Position 10 oder 11 entsprechend des Fahr- und oder Arbeitsmodus in verschwenkbarer Weise um die aufrechte Gelenkachse zu verlagern.

Bei den Darstellungen in den Fig.5 und 6 ist das zweite Bedienfeld 8 mittels einer Halterung, die mittels einer nicht näher dargestellten Schiebevorrichtung an oder im Bereich der Armlehne 2 befestigt ist, in die jeweilige Position entsprechend des Fahr- und oder Arbeitsmodus zu verschieben.

## Patentansprüche

1. Anordnung von Bedien- und/oder Anzeigeelementen für ein Nutzfahrzeug mit einem Bedienersitz (1) und zumindest einem Bedienfeld (7,8) und einer Armlehne, (2) die angrenzend an den Bedienersitz angeordnet sind, wobei das Bedienfeld von einem Bediener (4) zu bedienende Bedien- (5) und/oder visuell wahrzunehmende Anzeigeelemente (6) aufweist, wobei das Nutzfahrzeug in einem Fahr- und in einem Arbeitsmodus betreibbar ist, wobei zumindest ein erstes, vorzugsweise unverlagerbares (7) und zumindest ein zweites, verlagerbares Bedienfeld (8) vorgesehen sind, dass das zweite Bedienfeld (8) gegenüber dem ersten Bedienfeld (7) aus einer ersten Position (10) seitlich neben dem Bedienersitz (1) in eine zweite Position (11) zumindest teilweise in Richtung oberhalb der Oberschenkel (12) und vor den Oberkörper (13) des auf dem Bedienersitz (1) sitzenden Bedieners verlagerbar ist, **dadurch gekennzeichnet, dass** das zweite Bedienfeld (8) in seiner zweiten Position (11) die während des Arbeitsmodus für nicht benötigte Fahrfunktionen vorgesehenen Bedien- (5) und/oder Anzeigeelemente (6) auf dem ersten Bedienfeld (7) abdeckt.

2. Anordnung nach Anspruch 1, **dadurch gekennzeichnet, dass** das zweite Bedienfeld (8) mittels einer Schwenk- und/oder Schiebehalterung, die an oder im Bereich der Armlehne (2) befestigt ist, in die jeweilige Position (10,11) entsprechend des Fahr- und oder Arbeitsmodus des Nutzfahrzeuges in verschwenkbarer und/oder verschiebbarer Weise verlagerbar ist.

3. Anordnung nach Anspruch 1, **dadurch gekennzeichnet, dass** das zweite Bedienfeld (8) mittels einer Halterung, die mittels eines eine aufrechte Gelenkachse aufweisenden Gelenkes an oder im Bereich der Armlehne (2) befestigt ist, in die jeweilige Position entsprechend des Fahr- und oder Arbeitsmodus (10,11) in verschwenkbarer Weise um die aufrechte Gelenkachse verlagerbar ist.

4. Anordnung nach zumindest einem der vorstehenden Ansprüche, **dadurch gekennzeichnet, dass** das erste Bedienfeld (7) Bedien- (5) und/oder visuell wahrzunehmende Anzeigeelemente (6) für die Fahrfunktionen und das zweite Bedienfeld (8) Bedien- (5) und/oder visuell wahrzunehmende Anzeigeelemente (6) für die Arbeitsfunktionen des Nutzfahrzeuges und/oder mit dem Nutzfahrzeug zusammenwirkenden Geräte aufweist.

## Claims

1. Assembly of operator control and/or display elements for a utility vehicle having an operator seat (1) and at least one control panel (7, 8) and an armrest (2) which are arranged adjacent to the operator seat, wherein the control panel has operator control elements (5) which can be operated by an operator (4) and/or display elements (6) which can be perceived visually by the operator (4), wherein the utility vehicle can be operated in a driving mode and in a working mode, wherein at least one first, preferably non-displaceable, control panel (7) and at least one second displaceable control panel (8) are provided, that the second control panel (8) can be displaced with respect to the first control panel (7) from a first position (10) to the side of the operator seat (1) into a second position (11) at least partially in the direction above the thighs (12) and in front of the upper part of the body (13) of the operator sitting on the operator seat (1), **characterized in that** in its second position (11) the second control panel (8) covers operator control (5) and/or display elements (6) which are provided for driving functions which are not required during the driving mode, on the first control panel (7).

2. Arrangement according to Claim 1, **characterized in that**, by means of a pivoting and/or sliding mount which is attached to or in the region of the armrest (2), the second control panel (8) can be displaced in a pivotable or slidable fashion into the respective position (10, 11) corresponding to the driving mode and/or working mode of the utility vehicle.

3. Arrangement according to Claim 1, **characterized in that**, by means of a mount which is attached to or in the region of the armrest (2) by means of a joint having an upright joint axis, the second operator control panel (8) can be displaced in a pivotable fashion into the respective position corresponding to the driving mode and/or working mode (10, 11), about the upright joint axis.

4. Arrangement according to at least one of the preceding claims, **characterized in that** the first operator control panel (7) has operator control elements (5) and/or display elements (6) which can be perceived visually, for the driving functions, and the second operator control panel (8) has operator control elements (5) and/or display elements (6) which can be perceived visually, for the working functions of the utility vehicle and/or devices which interact with the utility vehicle.

## Revendications

1. Arrangement d'éléments de commande et/ou d'indication pour un véhicule utilitaire comprenant un siège d'opérateur (1) et au moins un pupitre de commande (7, 8) et un accoudoir (2), lesquels sont disposés adjacents au siège d'opérateur, le pupitre de commande possédant des éléments de commande (5) et/ou d'indication (6) à percevoir visuellement destinés à être maniés par un opérateur (4), le véhicule utilitaire pouvant fonctionner dans un mode de conduite et dans un mode de travail, au moins un premier pupitre de commande de préférence non déplaçable (7) et au moins un deuxième pupitre de commande déplaçable (8) étant présents, que le deuxième pupitre de commande (8) peut être déplacé par rapport au premier pupitre de commande (7) depuis une première position (10) latéralement à côté du siège d'opérateur (1) dans une deuxième position (11) au moins partiellement dans la direction au-dessus des cuisses (12) et devant le torse (13) de l'opérateur assis sur le siège d'opérateur (1), **caractérisé en ce que** le deuxième pupitre de commande (8) dans sa deuxième position (11) recouvre les éléments de commande (5) et/ou d'indication (6) sur le premier pupitre de commande (7) prévus pour des fonctions de conduite qui ne sont pas nécessaires pendant le mode de travail.

2. Arrangement selon la revendication 1, **caractérisé en ce que** le deuxième pupitre de commande (8) peut être déplacé d'une manière pivotante et/ou coulissante dans la position (10, 11) respective, correspondant au mode de conduite ou de travail du véhicule utilitaire, au moyen d'un support pivotant et/ou coulissant qui est fixé sur ou dans la zone de l'accoudoir (2).

3. Arrangement selon la revendication 1, **caractérisé en ce que** le deuxième pupitre de commande (8) peut être déplacé d'une manière pivotante autour d'un axe d'articulation vertical dans la position respective correspondant au mode de conduite ou de travail (10, 11), au moyen d'un support qui est fixé par le biais d'une articulation possédant l'axe d'articulation vertical sur ou dans la zone de l'accoudoir (2).

4. Arrangement selon au moins l'une des revendications précédentes, **caractérisé en ce que** le premier pupitre de commande (7) possède des éléments de commande (5) et/ou d'indication (6) à percevoir visuellement pour les fonctions de conduite et le deuxième pupitre de commande (8) des éléments de commande (5) et/ou d'indication (6) à percevoir visuellement pour les fonctions de travail du véhicule utilitaire et/ou des appareils coopérant avec le véhicule utilitaire.
